(19) Europäisches Patentamt
European Patent Office
Office européen des brevets

(11) Publication number: **0 119 869 B1**

# (12) EUROPEAN PATENT SPECIFICATION

(45) Date of publication of patent specification: **24.08.88**

(51) Int. Cl.⁴: **H 01 F 10/28,** G 11 B 5/64

(21) Application number: **84301931.6**

(22) Date of filing: **21.03.84**

## (54) Non-magnetic substrate material.

(30) Priority: **22.03.83 JP 47597/83**

(43) Date of publication of application: **26.09.84 Bulletin 84/39**

(45) Publication of the grant of the patent: **24.08.88 Bulletin 88/34**

(84) Designated Contracting States: **DE FR GB NL**

(56) References cited:
**FR-E- 91 842**
**GB-A-1 153 534**

**PATENTS ABSTRACTS OF JAPAN, vol. 8, no. 81 (E-238)1518r, 13th April 1984; & JP - A - 59 908 (HITACHI KINZOKU K.K.) 06-01-1984**

**PATENTS ABSTRACTS OF JAPAN, vol. 8, no. 59 (E-232)1496r, 17th March 1984; & JP - A - 58 209 105 (HITACHI KINZOKU K.K.) 06-12-1983**

**CHEMICAL ABSTRACTS, vol. 74, no. 18, 3rd May 1971, page 356, no. 92747c, Columbus, Ohio, US; C. SCHLENKER et al.: "Ferro-antiferromagnetic coupling between a NiFe thin film and its nickel oxide single-crystal substrate" & PHYS. STATUS SOLIDI A 1971, 4(1), K79-K82**

(73) Proprietor: **Hitachi Metals, Ltd.**
**1-2, Marunouchi, 2-chome Chiyoda-ku**
**Tokyo 100 (JP)**

(73) Proprietor: **HITACHI, LTD.**
**6, Kanda Surugadai 4-chome Chiyoda-ku**
**Tokyo 100 (JP)**

(72) Inventor: **Sakakihara, Masahiko**
**337, Higashibeppu**
**Kumagaya-shi (JP)**
Inventor: **Hasegawa, Kenzi**
**1790, Hatai Otonemachi**
**Kitasaitama-gun Saitama-ken (JP)**
Inventor: **Iwama, Akira**
**2348-5, Aza Kaminari Higashiishikawa**
**Katsuta-shi (JP)**

(74) Representative: **Goldin, Douglas Michael et al**
**J.A. KEMP & CO. 14, South Square Gray's Inn**
**London WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 119 869 B1

**Description**

Background of the Invention

This invention relates to an improvement in a non-magnetic substrate material for use in depositing crystalline or non-crystalline magnetic metallic films of Fe-Ni, Fe-Al-Si, etc.-based alloys.

In the production of, for example, film-form magnetic heads, integrated circuit elements, etc., such a process has been so far used, which comprises applying a mirror surface finishing to a non-magnetic substrate material such as barium titanate, calcium titanate, alumina, zinc ferrite, glass or the like, washing the non-magnetic substrate material in an organic solvent such as trichloroethylene, acetone or the like, forming a magnetic metallic film of Fe-Ni or Fe-Al-Si-based alloy on the non-magnetic substrate material to a film thickness of a few to several tens μm by a well known physical vapor-deposition technique such as vacuum vapor deposition, sputtering, ion plating, etc., and then heat-treating the substrate in vacuum at 500°—700°C for improving the magnetic properties.

However, the said conventional process has problems such as peeling of the magnetic metallic film at the heat treatment or poor attrition resistance, since most of the so far well known substrate materials have considerably different thermal expansion coefficients than the thermal expansion coefficient $\alpha$ of the magnetic metallic film, and thus the vapor-deposited magnetic metallic film is liable to peel off at the heat treatment for improving the magnetic properties. When a glass with a thermal expansion coefficient approximating to that of a magnetic metallic film is used as a substrate material, where selection of such glass can be made more easily, peeling of the vapor-deposited film is a less problem, but the glass is not always thoroughly compatible with the vapor-deposited film, and thus there is still a problem in bonding strength. When a film form magnetic head is made from the glass substrate, the substrate undergoes attrition by sliding between the head and a magnetic tape due to a low hardness of glass.

Thus, it has been keenly desired to develop a non-magnetic substrate material having such characteristics as a thermal expansion coefficient approximating to that of a magnetic metallic film of Fe-Ni, Fe-Al-Si, etc. based alloys ($\alpha_T$ = 120—150 × $10^{-7}$/°C) and a hardness approximating to that of magnetic powder contained in magnetic tapes ($H_V$ = 500—700 Kg/mm$^2$).

Summary of the Invention

An object of the present invention is to provide a non-magnetic substrate material suitable for forming a crystalline or non-crystalline magnetic metallic film of Fe-Ni, Fe-Al-Si, -based alloys thereon by a physical vapor-deposition to meet the said desire.

The present invention is therefor a magnetic film assembly comprising a non-magnetic substrate material and a magnetic metallic film vapour deposited thereon, where the magnetic film is an Fe-Ni-based alloy or Fe-Al-Si-based alloy having a high permeability, and in which the substrate has a thermal expansion coefficient approximately equal to that of the magnetic metallic film, and comprises a sodium chloride type lattice structure comprising a nickel-manganese oxide composition represented by the formula:

$$Ni_xMn_{2-x}O_2$$

wherein $0.05 \leqq x \leqq 1$, and containing, if desired, not more than 10% by weight of at least one of Al, Cr, Si, Sn and Ba as a secondary component on the basis of the nickel-manganese oxide.

The said oxide material was disclosed by the present applicants as a structural material relating to bonding with ferrite in the production of ferrite magnetic head (Japanese Patent Application Kokai (Laid-open) No. 52—126797), where it was directed to the characteristics as a structural material for a magnetic head, and it was not clarified yet whether the oxide material was suitable for a substrate material for vapor-depositing a magnetic metallic film or not.

As a result of extensive studies to develop novel materials for solving the said problems of the prior art, the present inventors have found that the non-magnetic material of the said structure is particularly suitable for a substrate material for depositing a magnetic metallic film of Fe-Ni, Fe-Al-Si, -based alloys, and have established the present invention.

According to the present invention, x in the general formula is set to $0.05 \leqq x \leqq 1$, because the thermal expansion coefficient $\alpha_T$ becomes 120—150 × $10^{-7}$/°C, which approximates to the thermal expansion coefficient $\alpha_T$ of a magnetic metallic film of Fe-Ni, Fe-Al-Si, etc. -based alloys in the said range for x.

When the said rock salt type structure material as the main components further contains at least one of Al, Cr, Si, Sn, Ba, as a secondary component in the present invention, a high density can be obtained. That is, a more preferable substrate material can be obtained by adding thereto at least one of Al, Cr, Si, Sn, Ba, so long as $\alpha_T$ of the resulting substrate can be approximate to the $\alpha_T$ of a magnetic metallic film of Fe-Ni, Fe-Al-Si, -based alloys. It is desirable to add not more than 10% by weight, preferably 0.5—5% by weight of at least one of these secondary components to the rock salt structure material on the basis of the rock salt structure material.

The present invention will be described in detail below, referring to Example.

Preferred Embodiments of the Invention

Example

Raw materials $MnCo_3$ and NiO were weighed out to prepare 500 g of non-magnetic oxide materials represented by the general formula, $Ni_xMn_{2-x}O_2$ for x = 0.05, 0.6, 0.8 and 1.0. The raw materials were mixed and pulverized in acetone in a ball mill for 10—20 hours. The mixing and pulverization can be also carried out in water or other organic solvents such as alcohol, etc. 4% by weight of $Al_2O_3$ was added to another same raw material with x = 0.6 at the pulverization and treated in the same manner as above on the basis of the raw material.

All of these mixtures were each calcined at 700°—1,200°C molded in molds, and sintered at a temperature of 1,150°—1,300°C in a nitrogen gas atmosphere. The resulting materials was analyzed by x-rays, and found to be in a NaCl structure. From these materials were then prepared substrates with a shape of 20 mm long, 10 mm wide and 2 mm thick and a mirror surface-finishing at one side. A magnetic metallic film of Fe-Ni-based alloy (Permalloy film) or a magnetic metallic film of Fe-Al-Si-based alloy (Sendust film) was formed each on the mirror surface-finished surfaces of the materials to a thickness of about 5 µm by sputtering. The resulting materials were heat-treated in a heating oven at 600°C in vacuum for 10 minutes, and left for natural cooling in the heating oven.

The characteristics of the thus obtained materials are shown in Table, where a material prepared from a substrate material of barium titanate ceramic in the same manner as above is shown as the prior art material for comparison.

Table

| material | $\alpha_T$ | $H_V$ | Film peeling | |
|---|---|---|---|---|
| | | | Permally | Sendust |
| A (x=1.0) | 130 x $10^{-7}$/°C | 600 Kg/mm$^2$ | none | none |
| B (x=0.8) | 135 " | 550 " | none | none |
| C (x=0.6) | 140 " | 500 " | none | none |
| D (x=0.05) | 120 " | 300 " | none | none |
| E* (x=0.6) | 142 " | 550 " | none | none |
| Prior art | 95 " | 900 " | swollen | swollen |

Remark:

*: 4% by weight of $Al_2O_3$ added

As is obvious from the above Table, no peeling took place with the materials according to the present invention at the heat treatment of the magnetic metallic film in contrast to the prior art material. The material further containing $Al_2O_3$ as the secondary component had an $\alpha_T$ of 142 × $10^{-7}$/°C and was obviously an effective and useful substrate material with a very high density as an additional advantage.

With the present non-magnetic substrate material a magnètic metallic film, for which a heat treatment is desirable for improving the magnetic characteristics after the formation of a magnetic metallic film, can be heat-treated, as desired, without any fear of film peeling, and electronic parts or elements with a film having good magnetic characteristics can be produced effectively.

The foregoing description is made only of a magnetic metallic film of Fe-Ni, or Fe-Al-Si-based alloy, but it is needless to say that the present invention is not limited only to such applications, but also is applicable as a substrate material for crystalline or non-crystalline magnetic films of other compositions, so long as they have the similar thermal expansion coefficients. The present substrate material with a physically vapor-deposited magnetic metallic film is applicable not only to film form magnetic heads, but also to other electronic parts, for example, integrated circuits, etc.

**Claims**

1. A magnetic film assembly comprising a non-magnetic substrate material and a magnetic metallic film vapour deposited thereon, where the magnetic film is an Fe-Ni-based alloy or Fe-Al-Si-based alloy having a high permeability, and in which the substrate has a thermal expansion coefficient approximately equal to that of the magnetic metallic film, and comprises a sodium chloride type lattice structure comprising a nickel-manganese oxide composition represented by the formula:

$$Ni_xMn_{2-x}O_2$$

wherein $0.05 \leqq x \leqq 1$, and containing, if desired, not more than 10% by weight of at least one of Al, Cr, Si, Sn and Ba as a secondary component on the basis of the nickel-manganese oxide.

2. A magnetic assembly according to claim 1 in which the substrate comprises a secondary component which is not more than 10% by weight of Al, on the basis of the nickel-manganese oxide.

3. A magnetic assembly according to claim 1 or claim 2 in which the secondary component, if present, is in the form of an oxide of the individual elements.

4. A magnetic assembly according to claim 3, wherein the oxide is $Al_2O_3$.

5. A magnetic assembly according to claim 4, wherein the sodium chloride type lattice structure material consists of 50% by mole of MnO, 50% by mole of NiO, futher containing 0.5—5% by weight of $Al_2O_3$ on the basis of the nickel-manganese oxide.

6. A magnetic assembly according to any one of the preceding claims, wherein the sodium chloride type lattice structure has a thermal expansion coefficient of 120—150 × $10^{-7}$/°C.

**Patentansprüche**

1. Magnetische Schichtanordnung mit einem nicht-magnetischen Substratmaterial und einem darauf aufgedampften metallischen Magnetfilm, wobei es sich bei dem Magnetfilm um eine Fe-Ni- oder Fe-Al-Si-Legierung hoher Permeabilität handelt, wobei das Substrat einen Wärmeausdehnungskoeffizient aufweist, der dem des Magnetfilms nahezu gleich ist und eine Gitterstruktur des Natriumchlorid-Typs mit einer Nickel-Manganoxyd Zusammensetzung der Formel

$$Ni_xMn_{2-x}O_2$$

aufweist, wobei $0.05 \leqq x \leqq 1$, die gegebenenfalls nicht mehr als 10 Gew.-% mindestens eines der Elemente Al, Cr, Si, Sn und Ba als sekundären Bestandteil, bezogen auf das Nickel-Manganoxyd, enthält.

2. Magnetische Anordnung nach Anspruch 1, wobei das Substrat einen sekundären Bestandteil enthält, bei dem es sich um nicht mehr als 10 Gew.-% Al, bezogen auf das Nickel-Manganoxyde, handelt.

3. Magnetische Anordnung nach Anspruch 1 oder 2, wobei der gegebenenfalls vorhandene sekundäre Bestandteil in Form eines Oxyds der einzelnen Elemente vorliegt.

4. Magnetische Anordnung nach Anspruch 3, wobei das Oxyd $Al_2O_3$ ist.

5. Magnetische Anordnung nach Anspruch 4, wobei das Material mit de Gitterstruktur des Natriumchlorid-Typs aus 50 Mol-% MnO und 50 Mol-% NiO besteht und außerdem 0,05 bis 5 Gew.-% $Al_2O_3$, bezogen auf das Nickel-Manganoxyd, enthält.

6. Magnetische Anordnung nach einem der vorhergehenden Ansprüche, wobei die Gitterstruktur des Natriumchlorid-Typs einen Wärmeausdehnungs-Koeffizient von 120 bis 150 × $10^{-7}$/°C hat.

**Revendications**

1. Ensemble de pellicule magnétique comprenant un matériau pour substrat non magnétique et une pellicule métallique magnétique qui y est déposé par condensation de vapeur, où la pellicule magnétique est un alliage à base de Fe-Ni ou un alliage à base de Fe-Al-Si ayant une haute perméabilité, et dans lequel le substrat a un coefficient de dilatation thermique approximativement étal à celui de la pellicule métallique magnétique, et présente une structure réticulaire de type chlorure de sodium comprenant une composition d'oxyde de nickel-manganèse représentée par la formule:

$$Ni_xMn_{2-x}O_2$$

où $0.05 \leqslant x \leqslant 1$, et contenant, éventuellement, pas plus de 10% de l'un au moins de Al, Cr, Si, Sn et Ba en tant que composant secondaire en poids rapporté à l'oxyde de nickel-manganèse.

2. Ensemble magnétique selon la revendication 1, dans lequel le substrat comprend un composant secondaire qui ne représente pas plus de 10% d'Al, en poids rapporté à l'oxyde de nickel-manganèse.

3. Ensemble magnétique selon la revendication 1 ou la revendication 2, dans lequel le constituant secondiare est, s'il est présent, sous la forme d'un oxyde des éléments individuels.

4. Ensemble magnétique selon la revendication 3, dans lequel l'oxyde est $Al_2O_3$.

5. Ensemble magnétique selon la revendication 4, dans lequel le matériau à structure réticulaire du type chlorure de sodium est composé de 50% en moles de MnO, de 50% en moles de NiO, contenant encore 0,5 à 5% d'$Al_2O_3$ en poids rapporté à l'oxyde de nickel-manganèse.

6. Ensemble magnétique selon l'une quelconque des revendications précédentes, dans lequel la structure réticulaire du type chlorure de sodium a un coefficient de dilatation thermique de 120 à 150 × $10^{-7}$/°C.